(19) Europäisches Patentamt

European Patent Office

Office européen des brevets

(11) **EP 1 406 035 A1**

(12) **EUROPEAN PATENT APPLICATION**

(43) Date of publication:
07.04.2004 Bulletin 2004/15

(51) Int Cl.⁷: **F16K 11/048**

(21) Application number: 02022263.4

(22) Date of filing: 04.10.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Faro Srl**
**37068 Vigasio (Verona) (IT)**

(72) Inventor: **Falavegna, Valter**
**37068 Vigasio (Verona) (IT)**

(74) Representative: **Reniero, Cirillo Silvano**
**c/o Dr.Reniero & Associati S.r.l.**
**Via D. Manin, 5**
**37122 Verona (IT)**

(54) **Electric three way diverting valve**

(57) A diverting valve provided with a three way valve body (1 ) and a driving assembly (2) designed to control the flow diversion, the said valve body (1) having an inlet in common (3) and a first and a second outlet (4 and 5) for the fluid, and housing therein a valve element (6), designed to move together with a control shaft (7), said control shaft being axially movable and controlled by the said driving assembly (2), the said valve element (6) being displaceable within the said valve body (1 ) between a closed position of the said outlet (4) and synchronous opening of the said outlet (5) and a closed position of the said second outlet (5) and synchronous opening of the said first outlet (4), at respective receiving seats (10, 11). The valve element (6) has an intermediate portion (60) and a proximal shutter element (64) and a distal shutter element (65), each provided at a respective end of the said intermediate spacing portion (60), and, in use, designed to abut against a respective valve seat (10 and 11), the said shutter elements (64, 65) and the said valve seats (10, 11) being positioned on opposite sides.

Fig.5

**Description**

The present invention relates to an electrically actuated three way valve suitable for diverting a water flow into two different directions.

Nowadays, water flow diverting valves actuated by electric linear actuators not provided with any resilient means are available on the market. The linear actuator commonly comprises a small AC power actuated motor with a threaded female rotor into which a threaded male shaft provided with a rotation preventing seat is screwed. As the rotor is made to rotate, the threaded shaft is forced to move in an axial direction, thereby forcing two respective opening-closing valve elements of the valve ways to move.

The main shortcoming of the above type of valves is that the closing of the valve ways is effected by displacing only one valve element (shutter), positioned in the way in common, that shuts in the direction of the water flow. The above way of operation entails a great likelihood both that a water hammer occurs in the plant, and that, as the valve picks up, *i.e.* when the valve elements receive the motion starting impulse, the valve element acting as a shutter is forced to move in a direction contrary to the thrust exerted by the water flow through the valve, thus being subjected to substantial stresses.

The main object of the present invention is to obviate the above shortcomings by providing a novel twin shutter system closing in a direction opposite to the fluid flow.

Another object of the present invention is to provide a novel diverting valve that is highly efficient, highly durable, and has competitive manufacturing costs.

These and other objects which will become better apparent hereinafter are attained by a diverting valve provided with a three way valve body and a driving assembly designed to control the flow diversion, the said valve body having an inlet in common and a first and a second outlet for the fluid, and therein housing a valve element designed to move together with a control shaft that is axially movable and controlled by the said driving assembly, the said valve element being displaceable within the said valve body between a closed position of the said first outlet and synchronous opening of the said second outlet, and a closed position of the said second outlet and synchronous opening of the said first outlet, at respective receiving seats, characterised in that the said valve element is comprises an intermediate portion, a proximal shutter element and a distal shutter element, each located at a respective end of the said intermediate spacing portion, and, in use, designed to abut against a respective valve seat, the said valve seats and the said shutter elements being positioned on opposite sides.

Further aspects and advantages of the present invention will be better apparent from the following detailed description of some currently preferred embodiments thereof, given by way of illustrating non-limiting example only, with reference to the accompanying drawings, in which:

Figure 1 shows a diagrammatic elevation side view of a three way valve;

Figures 2 to 4 are diagrammatic longitudinal section views of the three way valve body and of the conventional valve element of the valve shown in Fig. 1;

Figure 5 is a diagrammatic view of a longitudinal section of a three way valve body, and of the valve element of a valve according to the present invention;

Figures 6 to 8 are sections of details of the valve shown in Fig. 5;

Figures 9 to 11 are diagrammatic longitudinal section views of a three way valve body and of the associated valve element shown in Fig. 5;

Figure 12 is an exploded view on an enlarged scale of the three way valve shown in Fig. 5; and

Figure 13 is a load loss/flow rate plot of a three way valve according to the present invention.

In the accompanying drawings, identical or similar parts or components have been designated by the same reference numerals.

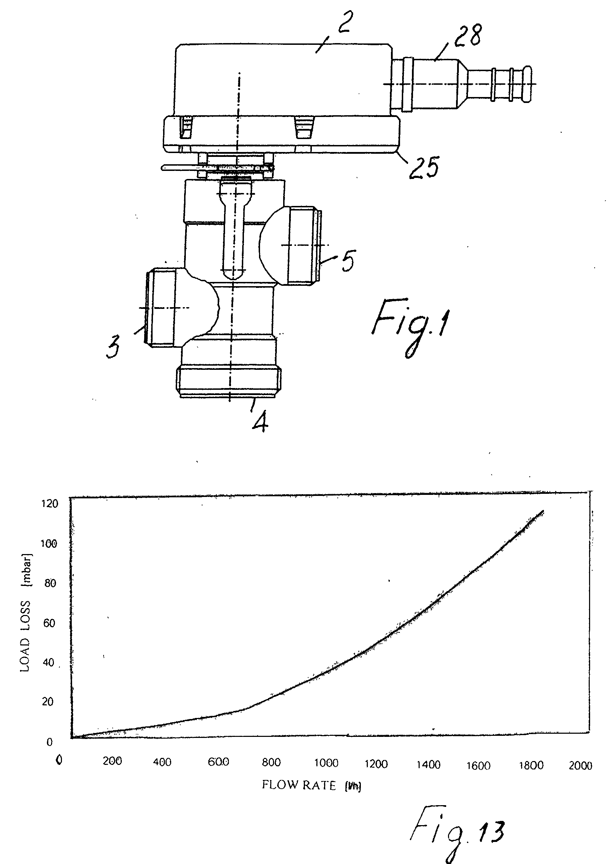

With reference first to Figures 1 to 4, it will be noted that a conventional diverting valve comprises two basic portions, namely a three way valve body 1 made of brass or plastic material, which has the function of diverting the water flow, and a driving assembly 2, which has the function of controlling the flow diversion by means of an electric driving assembly.

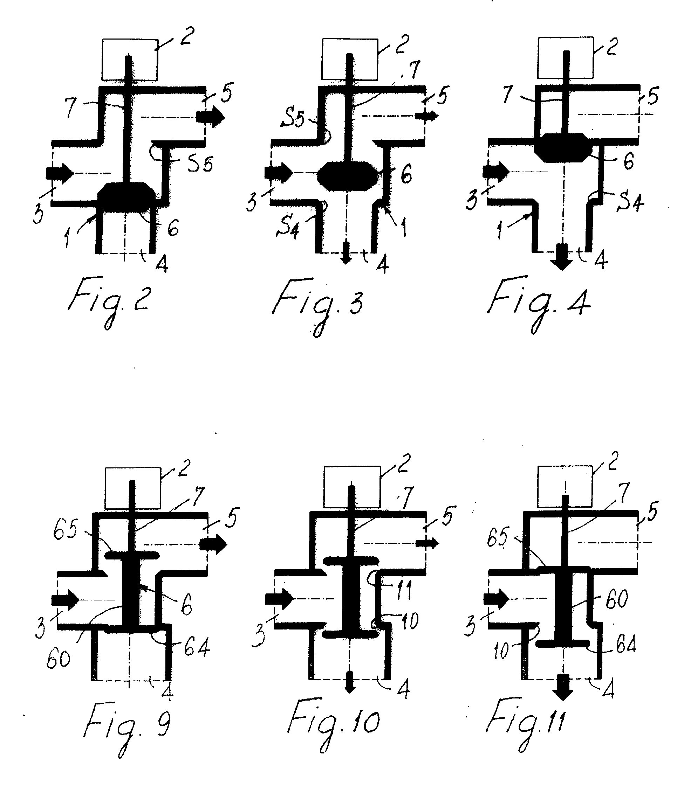

The valve body 1 has three ways, namely a way in common 3 which, in use, is usually an inlet arranged to receive a fluid (water), and two outlets 4 and 5 for the fluid, and the said valve body 1 houses therein a valve element or shutter 6 designed to move together with a control stem 7 that is longitudinally movable and controlled in turn by the driving assembly 2. The valve element 6 is displaceable within the valve body 1 between a closed position of way 4 (Fig. 2) and a closed position of way 5 (Fig. 4), both these positions being delimited by respective coaxial receiving seats S4 and S5, usually conical in shape, facing each other, whose taper widens in opposite directions, *i.e.* towards the shutter 6. The shutter 6 is thus displaced within the space delimited by seats S4 and S5, and, each time it does, it must move along the whole path joining the seats themselves.

It will be understood that if for instance the initial condition is that shown in Fig. 1, whilst water is flowing from the inlet 3 to the outlet 5, as the valve starts moving, the driving assembly 2 must also overcome the thrust exerted on the shutter by the water flow since, in order for the initial displacement of the shutter 6 to be effected, the thrust exerted by the water flow must be overcome too. Along the path between the closed position of way 4 and the closed position of way 5, the shutter 6 must move through a whole myriad intermediate positions (Fig. 3), with a remarkably relatively prolonged variation both of flow rate towards way 5 and of flow rate towards way 4, which can easily result in the occurrence of water hammers affecting the plant downstream of ways 4 and 5. The same chain of events unfolds should the shutter 6 move from the closed position of way 5 to the closed position of way 4.

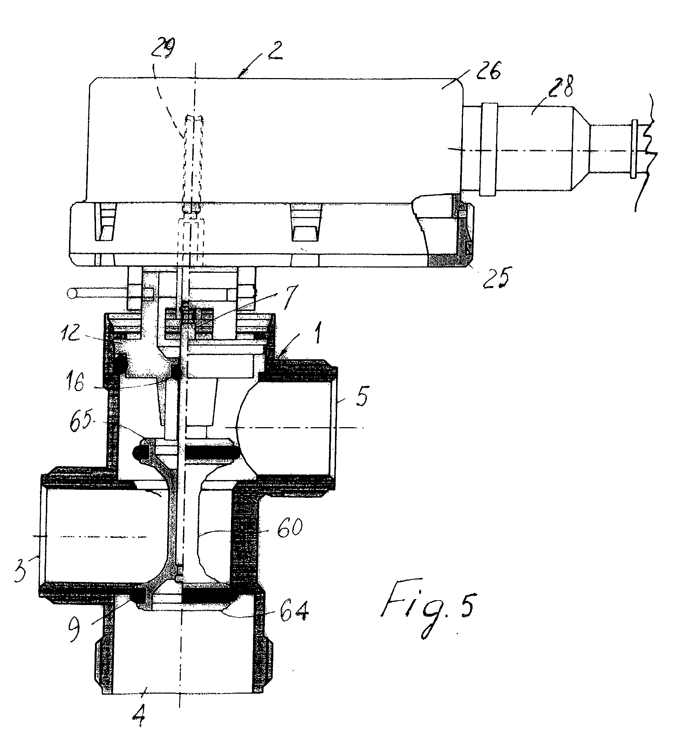

As it is better apparent from Figures 5 to 12, according to the present invention a valve element 6 is provided which comprises two shutters 64 and 65, each arranged at a respective end of an intermediate spacing portion 60. The shutter 6 is designed to be controlled by a control stem 7 that is in turn designed to be controlled by driving assembly 2.

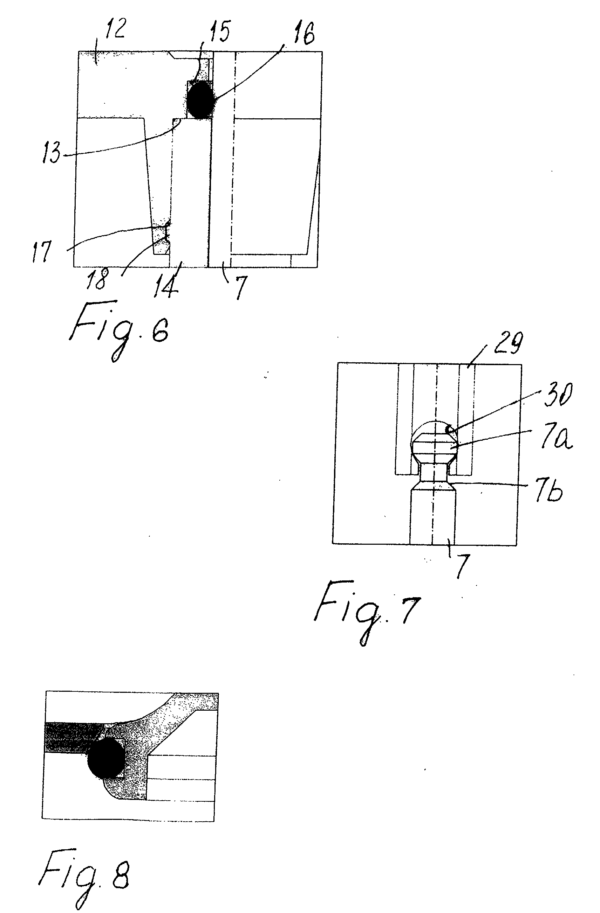

Valve element 6 fitted with a twin shutter is preferably made of a plastic material, while the control stem 7 is made of stainless steel. The valve element 6 and the control stem 7 are preferably co-moulded, thus they are integral with each other. A peripheral seat (Fig. 8) is formed on each shutter 64 and 65 of the valve element 6, said peripheral seat being shaped as an annular groove 8 for receiving a respective O-ring gasket 9, 9a to provide a seal between the shutter 64, 65 and its respective receiving seat 10, 11 when its respective way 4, 5 is closed.

More particularly, the valve element 6 is shaped as a spool provided with two end flanges acting as shutters, i.e. a proximal flange 64 and a distal flange 65 which, in use, are designed to abut against a respective valve seat, 10 and 11, but are positioned on a side opposite thereto. In other words, the shutter 64 is positioned within the light of way 4, whereas the shutter 65 is positioned within the light of way 5. To this end, the valve seats 10 and 11 are advantageously flared or conical in shape, and both have their taper narrowing or converging towards the light of way 3.

By means of the above arrangement, a novel twin shutter or dual shutter valve system is obtained, which closes by being moved in a direction contrary to water flow, as it will be further explicated hereinafter.

Shaft 7 co-moulded with valve element 6, is always kept in a coaxial position by means of an annular insert 12, preferably made of a plastic material, whose inner light has a multiple diameter so as to delimit a first shoulder 13 against which, in use, an end of a spacing bush 14 abuts, said bush being preferably made of Teflon® or any other suitable self-lubricating material, and a second shoulder 15 that, together with bush 14, delimits an annular seat for receiving an O-ring gasket 16 acting as a dynamic seal. Preferably, the inner light of insert 12 has also an annular recess 17 into which a respective annular protrusion 18 of bush 14 can insert, by snapping action, for a more stable positioning of the bush in the insert.

Outwardly, annular insert 12 has a shoulder 19 that, in conjunction with valve body 1, delimits a receiving seat for a static seal O-ring gasket 20 between the valve body 1 and the insert 12.

The annular insert 12 is held in position within valve body 1 on one side by a peripheral shoulder 21 adjacent to the shoulder 19, but larger in dimension than shoulder 19 and designed to abut against a respective inner shoulder of the valve body 1, and, on the other side by a resilient safety ring 22 designed to abut against a shoulder 23 of the annular insert 12 and to peripherally engage in an inner groove 24 of the valve body 1 (Fig. 12). In case the valve body 1 were made of a plastics material, the annular insert 12 could be locked in position by a suitable quick fastening system, e.g. a C-shaped clip.

Driving assembly 2 can comprise a containment housing, preferably formed by two portions made of plastics, a lower portion 25 having a support function and an upper covering portion 26 designed to be snap-engaged with the lower portion 25. Supporting portion 25 supports a linear actuator 27 driven by a reversible electric motor 28 and a control electronic card of any suitable type not shown in the drawings.

The connection between shaft 7 and linear actuator 27 preferably comprises a tappet shaft 29 which is arranged to be coaxial with shaft 7, and at one end thereof is connected to the linear actuator 27 in any suitable manner, e.g. by means of a constraining transverse pin (not shown), and at the other end has a head recess 30 designed to act as a receiving seat for the loose end 7a of shaft 7 formed with an annular narrowing groove.

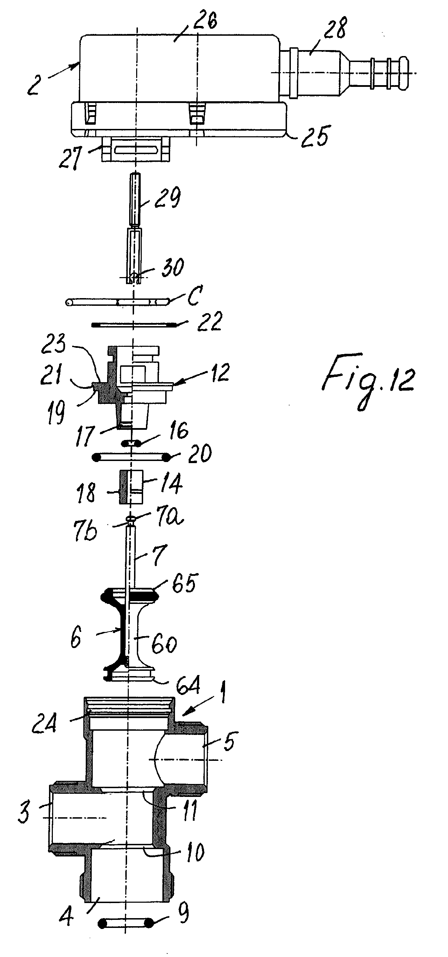

The operation of a three-way valve according to the present invention is quite simple and efficient. With reference to an initial arrangement such as that shown in Fig. 9, an electric control from the control electronic card starts electric motor 28 housed in box 2. The tappet shaft 29 is then displaced in an axial direction, thereby displacing shaft 7, which in turn displaces valve element 6 that opens outlet 4 and closes outlet 5, *i.e.* moves from the position shown in Fig. 9 to the position shown in Fig. 10, and eventually to the position shown in Fig. 11. Between the tappet shaft 29 and shaft 7, a 1.0 mm clearance is provided that allows the electric motor 28 to effect the pick up, and not be affected by any pick up load due to the water flow, and this holds in both operating directions of valve element 6. The time required to effect such an initial pick up operation is 1.65 s. The electric motor 28 keeps operating for an overall time in the range between 3 s and 4 s, thereby providing the correct positioning of both shutters 64 and 65.

The hydraulic seal of shutters 64 and 65 is provided by the respective O-ring 9, 9a that abuts against the inclined surface of the respective seat 10 and 11 formed in the valve body 1, thereby providing a semiradial seal that proved to be much more effective than the conventional seal (based on the edge seal). Furthermore, the semiradial seal prevents the O-ring from coming out of its own receiving seat 8, thereby contributing to guiding it to maintain a self-centred position.

As the electric motor 28 receives a subsequent control, it starts again in reverse. After a 1 mm load less stroke, the tappet shaft 29 displaces shaft 7, hence valve element 6, in an opposite direction. In 1.65 s outlet 5 is opened and outlet 4 is closed, thereby obtaining the hydraulic diversion of the water flow. The electric motor 28 keeps operating for an overall time in the range between 3 and 4 s, thereby providing the correct positioning of the valve element 6.

As a consequence of the above, the three way valve according to the present invention makes it possible to eliminate any occurrence of any water hammers that may affect the plant upstream or downstream from the valve, as well as to increase the working-life of the actuator, while subjecting it to smaller pick up stresses upon starting. In order to better clarify this phenomenon, reference should be made to Figures 2 to 4, which illustrate the operation of a conventional three-way valve provided with an electric actuator 2, during switching OFF (*i.e.* as the only shutter 6 moves closer to actuator 2). It will be noted that in the three steps shown the closing of way 5 occurs in the same direction as the water flow, thereby inevitably causing abrupt interruption of water flow which might result in water hammers whose magnitude depends on the circulating water mass, and, above all, on the length of the lines.

In Figures 9 to 11 a switching ON (*i.e.* valve element 6 moving away from the actuator 2) in a valve according to the present invention is shown. Clearly, closing of way 5 is accomplished by displacing the two shutters 64 and 65 in a direction contrary to the water flow through line 3. The closing of the shutters is constantly counteracted by the water flow, therefore transmission of overpressures (causing the water hammers) in the hydraulic plant in which the diverting valve is fitted is avoided.

Supposing now that with both valves in the positions reached there was no longer demand of water delivery from way 4 (*e.g.* it can be envisioned that a series of zone valves installed in a distribution plant are shut). Under such conditions, the reopening of way 5 in a diverting valve according to the present invention is made easier by the water flow and pressure, whereas in a conventional diverting valve, the reopening is hindered just by the thrust exerted by the flow.

The rated driving force of an electric motor 28 used in this type of valve is in the range from 25 to 30 N. The pumps fitted in boilers (a typical application of a diverting valve according to the present invention is the diversion of the water flow in the primary circuit of domestic boilers) have a maximum head delivery equalling 0.6 bar (at a zero flow rate). The sections of the valve through which the water flows have an area slightly in excess of 250 mm$^2$, therefore the force exerted on the shutter is equal to:

$$F = pA = 60000 \, [Pa] \, 0.00025 \, [m^2] = 15[N].$$

This means that with a conventional valve, a counteracting force equalling about half the rated force of the actuator is produced at pick-up. Such an effect is enhanced in case the shutter adheres to the valve body 1 (as it normally happens after a certain number of hours of operation of the valve - *i.e.* when the valve is kept in one single position for a long time).

With a valve according to the invention, an additional 15 N force is applied to the electric actuator.

Ultimately, the hydraulically actuated closing twin shutter 6 in one piece without O-ring 9 moves within the valve body 1 and becomes a valve shutter element by simply fitting O-ring 9. This aspect makes it possible to avoid mounting two separate shutter elements onto the shaft, thus avoiding the provision of two locking Seger rings and two static seal O-rings on shaft 7, as it is usual in conventional diverting valves, and therefore it makes it possible to reduce manufacturing costs, whilst still providing a better sealing (semiradial seal) at O-rings 9 and a secure centring thereof.

Bush 14 for guiding shaft 7 is maintained in position by means of a fixed joint consisting of groove 17 and protrusion 18, so that bush 14 can be inserted into insert 12 only in the absence of shaft 7. Therefore the bush 14 can act as a stop for the dynamic seal O-ring 16, also because securely engaged in insert 12, the engagement being further secured once the shaft 7 has been inserted.

The (1 mm) clearance provided in the mechanical coupling of shaft 7 with tappet shaft 29 allows the electric motor 28 to pick up in a loadless manner in both stroke directions of the shutter, even in the presence of a water flow, as better explained above.

The upstream closing movement of the twin shutter 64, 65 allows to eliminate any water hammers that may affect the plant, and increase the operating life of electric motor 28, while subjecting it to smaller pick up stresses.

The three way-body 1 can be made of a metal material, of a plastics material, or else a plastic material built into a hydraulic assembly.

Fig. 12 shows a diagram of the load losses of a diverting valve according to the present invention at both outlets 4 and 5, which, as it can be seen, are particularly low even at remarkable flow rates, *i.e.* higher than 600 l/h.

Characteristic specifications:

| Motor type: | |
|---|---|
| Synchronous Power 50 Hz 40 mA or 24 V 50 Hz 140 mA | 230 V |
| Rated driving force: | 30N ± 5N |

(continued)

| Motor type: | |
|---|---|
| Diversion time | 1.65 s |
| Minimum motor operating time | 3-4 s |

The above described invention is susceptible to numerous modifications and variations within the scope of the claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A three way diverting valve comprising a three way valve body (1) and a driving assembly (2) designed to control the flow diversion, said valve body (1) having an inlet in common (3) and a first and a second outlets (4 and 5) for the fluid, and housing therein a valve element (6) designed to move together with a control shaft (7) movable in an axial direction and controlled by the said driving assembly (2), the said valve element (6) being displaceable within the valve body (1) between a closed position of the said outlet (4) and synchronous opening of the said outlet (5), and a closed position of the said second outlet (5) and synchronous opening of the said first outlet (4), at respective receiving seats (10, 11), **characterised in that** the said valve element (6) comprises an intermediate portion (60), a proximal shutter element (64) and a distal shutter element (65) each located at a respective end of the said intermediate spacing body (60) and, in use, designed to abut against a respective valve seat (10) and 11), the said shutter elements (64, 65) and the said valve seats (10, 11) being positioned on opposite sides.

2. A valve according to claim 1, **characterised in that** the said proximal shutter element (64) is positioned within the light of the said first outlet (4), whereas the said distal shutter element (65) is provided in the light of the said second outlet (5).

3. A valve according to claim 1 or 2, **characterised in that** the said valve seats (10 and 11) are flared or conical in shape, with a taper narrowing towards the light of the said first outlet (3).

4. A valve according to anyone preceding claims, **characterised in that** in each shutter element (64 and 65) of the said valve element (6) a peripheral seat (8) is formed to receive a respective O-ring gasket (9, 9a) to provide the seal between the shutter element (64, 65) and the respective receiving valve seat (10, 11) when the said seat is closed.

5. A valve according to anyone preceding claim, **characterised in that** the said valve element (6) is formed as a spool provided with two end flanges (64, 65) acting as shutters, which, in operation, are designed to abut against a respective valve seat (10 and 11) and positioned on opposite sides.

6. A valve according to anyone preceding claim, **characterised in that** the said valve element (6) is co-moulded with the said control shaft (7) so as to form a one body therewith.

7. A valve according to anyone preceding claim, **characterised in that** it comprises an annular insert (12) designed to be inserted into the said valve body (1) and having a multiple diameter inner light, whereby a first shoulder (13) and second shoulder (15) are delimited, a bush (14) made of a self-lubricating material designed to receive therein a section of the said control shaft (7) and to be inserted into the said annular insert (12), to abut against the said first shoulder (13) whereby with the said second shoulder an annular receiving seat (15) is delimited for an O-ring gasket (16) acting as a dynamic seal towards the said control shaft (7).

8. A valve according to claim 7, **characterised in that** the inner light of the said annular insert (12) and the said bush (14) are provided with mutual snap coupling means (17, 18), to stably retain the annular insert (12) and the said bush (14) in position.

9. A valve according to claim 8, **characterised in that** the said coupling means comprise an inner recess (17) and an annular protrusion (18) designed to be inserted, by snapping action, into the said annular recess (17).

10. A valve according to claim 7 or 8, **characterised in that** the said annular insert (12) has an outer shoulder (19) designed, in conjunction with the said valve body (1), to delimit a receiving seat for an O-ring gasket (20) for providing a static seal between the valve body (1) and the annular insert (12).

11. A valve according to claim 10, **characterised in that** the said annular insert (12) has a peripheral shoulder (21) designed so as to be larger than the said outer shoulder (19) and designed to abut against a respective inner shoulder of the said valve body (1), and a shoulder (23), a safety resilient ring (22) designed to abut against the said shoulder (23) and to peripherally engage in an inner groove (24)

of the valve body (1) to lock the said annular insert (12) in position.

12. A valve according to claim 10, **characterised in that** the said valve body (1) is made of a plastics material and in the said annular insert (12) comprises a clip (C) for locking in position.

13. A valve according to anyone preceding claim, **characterised in that** the said driving assembly (2) comprises a containment housing or case made of two portions, a lower portion (25) acting as a support for a linear actuator (27) and a control electronic card, and an upper covering portion (26) designed to be engaged, by snapping action, with the said lower portion (25).

14. A valve according to anyone preceding claim, **characterised in that** the said driving assembly (2) comprises a reversible electric motor (28), a tappet shaft (29) which is arranged to be coaxial with the said control shaft (7) and has an end designed to connect to the said linear actuator (27) with clearance.

15. A valve according to claim 14, **characterised in that** the other end of the said tappet shaft (29) has a head recess (30) designed to act with clearance as a receiving seat for an end (7a) of the said control shaft (7) formed with an annular narrowing groove (7b).

*Fig.1*

*Fig.13*

Fig.2

Fig.3

Fig.4

Fig.9

Fig.10

Fig.11

Fig. 5

Fig. 6

Fig. 7

Fig. 8

*Fig.12*

**European Patent Office**

## EUROPEAN SEARCH REPORT

Application Number

EP 02 02 2263

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 945 687 A (ROSSIGNOLI MICHELE) 29 September 1999 (1999-09-29) * column 2, line 24 - column 6, line 25 * * figures 1,2 * | 1,2,4-6 | F16K11/048 |
| Y | | 3,7-15 | |
| Y | US 5 152 320 A (ZIMMERLY ROBERT D) 6 October 1992 (1992-10-06) * abstract; figures 1-6 * | 3 | |
| Y | EP 0 907 046 A (SCANFERLA GIORGIO) 7 April 1999 (1999-04-07) * paragraph [0080] - paragraph [0090] * * figures 1,2 * | 7-15 | |
| X | US 2 601 989 A (MODES EDWARD E) 1 July 1952 (1952-07-01) * figure 1 * | 1-6 | |
| X | DE 19 02 728 A (JUNKERS & CO) 13 August 1970 (1970-08-13) * figures 1,2 * | 1,4,6 | TECHNICAL FIELDS SEARCHED (Int.Cl.7) |
| X | GB 1 073 412 A (GULDE REGELARMATUREN VERWALTUN) 28 June 1967 (1967-06-28) * figures 1,2 * | 1,2,5,6 | F16K |

The present search report has been drawn up for all claims

| Place of search | Date of completion of the search | Examiner |
|---|---|---|
| MUNICH | 12 February 2003 | Awad, P |

EPO FORM 1503 03.82 (P04C01)

**ANNEX TO THE EUROPEAN SEARCH REPORT
ON EUROPEAN PATENT APPLICATION NO.**                EP 02 02 2263

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2003

| Patent document cited in search report | | Publication date | Patent family member(s) | | Publication date |
|---|---|---|---|---|---|
| EP 0945687 | A | 29-09-1999 | IT | VR980019 A1 | 24-09-1999 |
| | | | EP | 0945687 A1 | 29-09-1999 |
| US 5152320 | A | 06-10-1992 | NONE | | |
| EP 0907046 | A | 07-04-1999 | EP | 0907046 A1 | 07-04-1999 |
| US 2601989 | A | 01-07-1952 | NONE | | |
| DE 1902728 | A | 13-08-1970 | DE | 1902728 A1 | 13-08-1970 |
| | | | BE | 744680 A1 | 01-07-1970 |
| | | | FR | 2028756 A5 | 16-10-1970 |
| | | | NL | 7000772 A | 23-07-1970 |
| GB 1073412 | A | 28-06-1967 | DE | 1229354 B | 24-11-1966 |
| | | | BE | 651459 A | 01-12-1964 |
| | | | LU | 46687 A1 | 05-10-1964 |
| | | | NL | 6409054 A | 08-02-1965 |

EPO FORM P0459

For more details about this annex : see Official Journal of the European Patent Office, No. 12/82